# EUROPÄISCHE PATENTSCHRIFT

(11) **EP 1 851 839 B1**
(45) Veröffentlichungstag und Bekanntmachung des Hinweises auf die Patenterteilung: **26.08.2015**
(21) Anmeldenummer: 06723011.0
(22) Anmeldetag: 09.02.2006
(51) Int. Cl.: H02B 13/02

(54) **SCHALTANLAGE**
SWITCHGEAR
INSTALLATION DE COMMUTATION

(30) Priorität: 25.02.2005 DE 102005009207
(43) Veröffentlichungstag der Anmeldung: 07.11.2007
(73) Patentinhaber: ABB Technology AG, 8050 Zürich (CH)
(72) Erfinder: ENDRE, Thor, N-3715 Skien (NO); ESPESETH, Robert, N-3714 Skien (NO); GRANHAUG, Ole, N-3724 Skien (NO); KUHELFELT, Jan-Henrik, 100027 Beijing (CN); LANDSVERK, Henrik, N-3744 Skien (NO); LINDQVIST, Lars-Johan, N-3718 Skien (NO); LOHNE, Stanley, N-3930 Porsgrunn (NO); NAPER, Öivind, N-3713 Skien (NO); RENSKOUG, Hakon, 3617 Kongsberg (NO); SKRYTEN, Pal, N-3714 Skien (NO)
(74) Vertreter: Miller, Toivo
(86) Internationale Anmeldenummer: PCT/EP2006/001139
(87) Internationale Veröffentlichungsnummer: WO 2006/089644

(56) Entgegenhaltungen:
- WO-A-90/13932
- DE-A1- 2 729 571
- DE-A1- 10 017 585
- DE-A1- 19 502 063
- US-A- 5 508 486

## Beschreibung

Die Erfindung betrifft eine Schaltanlage nach dem Oberbegriff des Anspruches 1.

Eine derartige Schaltanlage wird bevorzugt im Mitteispannungsbereich eingesetzt, also in Spannungsebenen von 24 KV oder 36 KV. Sie kann ein Schaltfeld oder mehrere Schaltfelder umfassen, in denen beispielsweise Lasttrennschalter, Sammelschienen und dergleichen untergebracht sind. Die Schaltanlage kann so ausgebildet sein, dass das Außengehäuse gasdicht verschlossen ist, wobei dann, wenn zwei Felder nebeneinander angeordnet sind, die einzelnen Felder miteinander verschweißt sind. Die Schaltanlage kann einen gemeinsamen Gasraum, der bei niedrigeren Spannungsebenen mit Luft und bei höheren Spannungsebenen, z.B. bei einer Spannungsebene von 36KV insbesondere mit SF6-Isoliergas gefüllt sein kann, besitzen. Das Gas innerhalb des Gasraumes, d.h. das SF6-Gas oder die Luft kann beispielsweise mit einem Druck von 1,4 bar betrieben werden.

Shaltambagen für dem mittelspannungsbereich sind aus den Dokumenten WO-A-90/13 932, WO-A-93/20572 und DE-A-27 29571 bekannt.

Aufgabe der Erfindung ist es, eine Schaltanlage der eingangs genannten Art zu schaffen, mit der die Herstellung gegenüber bekannten Schaltanlagen erheblich vereinfacht ist.

Erfindungsgemäß wird diese Aufgabe gelöst durch die Merkmale des Anspruches 1.

Danach ist jedes Feld einer mehrfeldrigen Schaltanlage modular ausgebildet; wenigstens ein Feld bildet ein erstes Modul, wobei zwischen der Frontwand und der Rückwand jedes Moduls je ein Trägerelement befestigt ist, an dem je ein Lasttrennschalter fixier-bar ist, wobei das Trägerelement mit der Front-und/oder Rückwand fest verbunden ist..

Weiter ist erfindungsgemäß das bewegliche Kontaktstück jedes Lasttrennschalters vertikal beweglich; der Lasttrennschalter ist dabei am oberen Ende mit den Sammelschienen verbunden und trägt diese.

Das erste Modul kann natürlich auch eine einfeldrige Schaltanlage, bilden.

Zur Herstellung einer Schaltanlage mit mehreren Feldern werden diese mit den in einer vertikalen Ebene verlaufenden Randkanten der Boden-, Decken-, Front- und Rückwand zusammengesetzt und dort miteinander verbunden, z.B. verschweißt, so dass hierbei eine Gasdichtigkeit der Schaltanlage erzeugt ist, siehe auch weiter unten.

Gemäß einer vorteilhaften Ausgestaltung der Erfindung ist insbesondere dann, wenn Sicherungen vorgesehen sein sollen, ein zweites Modul vorgesehen, in dem die Sicherungen eingesetzt sind, so dass die Höhe des zweiten Moduls gegenüber der des ersten Moduls vergrößert ist. Dabei sind die im ersten Modul befindlichen Komponenten an gleicher Stelle auch im zweiten Modul angeordnet, so dass bezüglich diesem Teilbereich die Module einander gleichen; das zweite Modul besitzt, da es die Sicherungen aufnimmt, gegenüber dem ersten Modul eine vergrößerte Höhe.

Selbstverständlich kann das zweite Modul ebenfalls eine einfeldrige Schaltanlage bilden. Man kann auch sagen, dass das zweite Modul aus dem ersten Modul dadurch entsteht bzw. das erste Modul weiter gebildet wird, indem es mit einer Sicherungsanordnung ergänzt wird. Die Sicherungsanordnung benötigt zusätzlichen Platz, so dass die Höhe des zweiten Moduls vergrößert ist. Die Lasttrennschalter und Trägerelemente beider Module befinden sich auf gleicher Höhe und sind gleich ausgebildet.

Gemäß einer vorteilhaften Ausgestaltung der Erfindung ist die Frontwand im unteren Bereich gestuft, wobei der Abstand des unterhalb der Stufe befindlichen Frontwandabschnittes von der Rückwand kleiner ist als der Abstand des oberen Frontwandabschnittes von der Rückwand. In diesem unteren Frontwandabschnitt sind die Kabelzuführungen für das jeweilige Modul angeordnet, weswegen die unteren Frontabschnitte aller Module die gleiche Höhe besitzen.

Gemäß einer vorteilhaften Ausgestaltung der Erfindung sind an den einem benachbarten Modul zugewandten Wandkanten umlaufende, senkrecht zu den Boden-, und Deck-, Front- und Rückwänden vorspringende Flanschleisten angeformt, die gegeneinander gelegt und miteinander verbunden, z.B. verschweißt sind, wobei die Verschweißung durch Punktschweißung zur Erhöhung der Fertigkeit und "Saumschweißen" an den freien Randkanten der Flänschleisten zur Erzielung einer ausreichenden Gasdichtigkeit erfolgt.

Anstatt einer Verschweißung können die Flanschleisten auch miteinander verklebt sein, wobei der Klebstoff gegebenenfalls auch als Dichtmittel dient.

Dem gegenüber besitzt der Lasttrennschalter an seinem unteren Ende ein feststehendes Erdungsschaltkontaktstück, das mittels eines Erdungsschalters an Erde legbar ist. Zusätzlich zu dem Erdungsschalterkontaktstück können Leitungen angeschlossen sein, die bei den ersten Modulen mit den zugehörigen Kabeleinführungen und bei den zweiten Modulen mit je einer zugehörigen Sicherung verbunden sind.

Das untere Ende des Lasttrennschalters mit dem feststehenden Erdungskontakt befindet sich in besonders vorteilhafter Ausgestaltung zwischen zwei Abschirmelementen, die das elektrische Feld an dieser Stelle steuern.

Oben ist erwähnt, dass jedes Modul ein Trägerelement aufweist, an dem je ein mehrphasiger Lasttrennschalter fixierbar ist. Zu diesem Zweck ist der Antrieb für das bewegliche Kontaktstück jedes Lasttrennschalterpoles in einem Antriebsgehäuse untergebracht, das am Trägerelement fixiert ist. Hierzu besitzt das Trägerelement eine der Anzahl der Phasen entsprechende Anzahl von Aussparungen, in die je ein Antriebsgehäuse einfügbar ist. Die Aussparungen sind erfindungsgemäß U-förmig nach oben offen und die vertikalen Seitenkanten der Aussparungen greifen in Richtung der Bewegung des beweglichen Kontaktstückes verlaufende, rillenartige Vertiefungen an den Breitseitenflächen des Antriebsgehäuses ein, so dass zur Montage jedes Antriebsgehäuse von oben mit den Vertiefungen in die Aussparungen einfügbar ist und damit jeder Lasttrennschalterpol gegen Verdrehen um eine horizontale und vertikale Achse gesichert ist.

In besonders vorteilhafter Weise ist das Trägerelement U-förmig ausgebildet; er besitzt einen Stegabschnitt mit den Aussparungen, welcher Stegabschnitt in einer vertikalen Ebene liegt, und zwei senkrecht dazu verlaufende Schenkel, die horizontal in dem Modul angeordnet sind. Der obere Schenkel weist Schenkelaussparungen auf, die in die Aussparung im Stegabschnitt übergehen, so dass der obere Schenkel das Einsetzen des Antriebsgehäuses in die Aussparung nicht behindert. Eine Fixierung des Antriebsgehäuses erfolgt am unteren und oberen Ende jedes Pols über Sammelschienen (oben) bzw. Verbindungsleiter zu den Kabelanschlüssen oder zu den Sicherungen (unten).

Die Ebene, in der die Schenkelenden oder Schenkelendkanten eines Trägerelementes liegen, verläuft in besonders vorteilhafter Weise senkrecht und befindet sich in der Nähe der Trennebene zwischen zwei Modulen und bei einem außen liegenden Modul in Bereich der außen liegenden Seitenwandung. Dabei sind alle Schenkel jedes Trägerelementes in der Schaltanlage in gleiche Richtung ausgerichtet und springen in gleicher Richtung vor. Aufgrund der besonderen Anordnung der Trägerelemente in jedem Modul ist der Raum zwischen dem senkrecht verlaufenden Steg jedes Trägerelementes und der Ebene, die der Ebene mit den Schenkelendkanten benachbart ist, kleiner als der Raum zwischen dem Steg und der diesem Steg gegenüberliegenden Trennebene zum nächsten Modul; damit sind die Trägerelemente außermittig in jedes Modul eingesetzt, so dass auch die Lasttrennschalterpole außermittig angeordnet sind, wodurch Platz gewonnen wird, um gegebenenfalls weitere Einbauten in das Modul einbringen zu können.

Gemäß einer vorteilhaften Ausführungsform ist zur Verstärkung jedes Trägerelementes an den freien Enden der Schenkel je eine Leiste angeformt, die horizontal verlaufen und aufeinander zugerichtet sind und in einer Ebene liegen, die parallel zum Stegabschnitt verläuft, wobei die offene Seite der U- bzw. C-Form zum benachbarten Modul auf einer Seite hin offen ist bzw. zur benachbarten Außenseitenwand eines außen liegenden Schaltfeldes.

In besonders vorteilhafter Weise liegen die Ebene der Leisten etwa im Bereich der Trennebene zwischen zwei benachbarten Modulen bzw. bei dem außen liegenden Schaltfeld etwa im Bereich der Außenseitenwand.

An den vertikal verlaufenden Kanten des Stegabschnittes jedes Trägers, auch Trägerelemente genannt, sind in vorteilhafter Weise Führungsstege in die Richtung, in der die Schenkel vorspringend abgewinkelt sind, vorspringend vorgesehen, wobei die Führungsstege mit den Schenkeln und dem Stegabschnitt je einen rechten Winkel einnehmen.

Dadurch wird der Raum auf der Innenseite des Stegabschnittes, der auch-als Innenraum des Trägers bezeichnet werden kann, durch die Schenkel, die Leisten und die Führungsleisten wenigstens teilweise begrenzt oder definiert. Dieser Innenraum ist größer als der Außenraum d. h. dem Raum zwischen Außenfläche des Stegabschnittes und der gegenüberliegenden Trennebene oder Seitenwand. Das Trägerelement ist vertikal etwa mittig im Schaltfeld angebracht und an den Innenflächen der Front- und/oder Rückwand befestigt.

In den Führungsleisten sind Öffnungen zur Halterung und Führung von Antriebswellen für den Lasttrennschalter und den Erdungsschalter vorgesehen. Vertikal unterhalb der Aussparungen befinden sich in dem Stegabschnitt weitere U-förmige senkrecht nach unten offene Aussparungen, die so bemessen sind, dass je ein Erdungsschaltmesser durch die weiteren Aussparungen aus dem Innenraum des Trägerelementes an das am unteren Ende jedes Lasttrennschalterpoles angeordnete feststehende Erdungskontaktelement schwenkbar ist.

Vorteilhafte Ausgestaltungen und Verbesserungen der Erfindung sind den weiteren Unteransprüchen zu entnehmen.

Anhand der Zeichnungen, in der einige Ausführungsbeispiele der Erfindung dargestellt sind, sollen die Erfindung sowie weitere vorteilhafte Ausgestaltungen der Erfindung und weitere Verbesserungen und Vorteile näher erläutert und beschrieben werden.

Es zeigen
- Fig. 1: eine perspektivische Ansicht einer dreifeldrigen Schaltanlage, schematisch dargestellt,
- Fig. 2: eine Innenansicht einer Schaltanlage gemäß Fig. 1, ohne einige Einbauten,
- Fig. 3: eine perspektivische Ansicht eines Trägerelementes,
- Fig. 4: eine perspektivische Einsicht in ein mehrfeldriges Schaltfeld mit Inneneinbauten,
- Fig. 5: eine perspektivische Teilansicht des unteren Bereiches der Lasttrennschalter mit Trägerelement,
- Fig. 6: eine weitere Ansicht der Anordnung gemäß Fig. 5,
- Fig. 7: eine Einsicht in einen Lasttrennschalter,
- Fig. 8: eine Aufsicht auf das Gehäuse des Lasttrennschalters,
- Fig. 9: eine perspektivische Ansicht einer Demontageeinrichtung für Sicherungselemente,
- Fig. 10: eine perspektivische Ansicht eines Sicherungskopfes,
- Fig. 11: eine Frontansicht auf eine weitere Ausgestaltung der Schaltanlage,
- Fig. 12 bis 15: unterschiedliche Ausführungsformen der Schaltanlage entsprechend einer Schnittansicht XII-XII der Fig. 11.

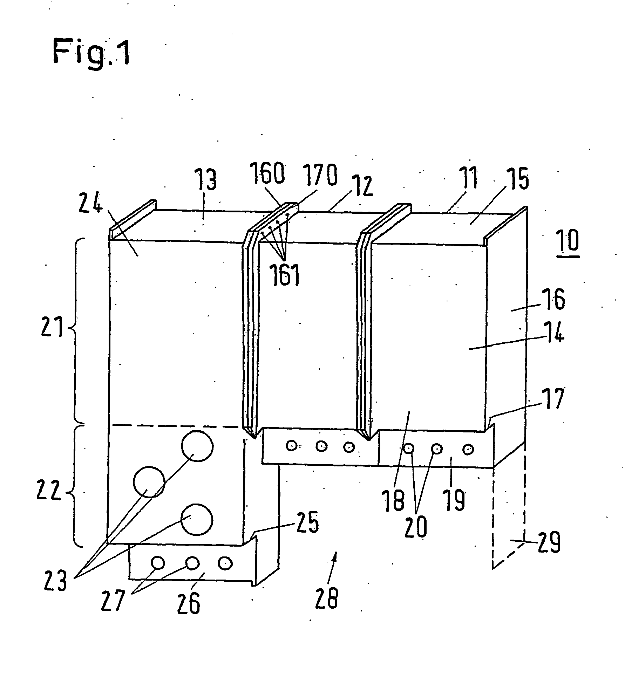

Die Fig. 1 zeigt eine Schaltanlage 10 mit drei Feldern, welche Felder zwei Kabelfelder 11 und 12 und ein Sicherungsfeld 13 sind.

Die beiden Kabelfelder 11 und 12 sind gleich ausgebildet; sie besitzen eine gestufte Frontwand 14, eine Deckenwand 15, eine Seitenwand 16 (die Bodenwand ist nicht in der Fig. 1 nicht sichtbar bzw. dargestellt). Die Frontwand 14 ist im unteren Bereich gestuft, so dass sich oberhalb der Stufung 17 ein oberer Frontwandabschnitt 18 und darunter ein unterer Frontwandabschnitt 19 ergeben; der untere Frontwandabschnitt 19 besitzt Anschlusskontaktstücke 20 zum Anschließen von Kabeln.

Das als zweite Modul bezeichnete Sicherungsschaltfeld 13 umfasst einen Bereich 21, der, wie weiter unten näher dargestellt ist, den ersten Modulen 11 und 12 entspricht. Dieser Bereich 21 ist ergänzt durch einen Bereich 22, in dem sich innerhalb des Schaltfeldes der Anzahl der Phasen entsprechende Anzahl von Sicherungsanordnungen 23, kurz Sicherungen genannt, befinden. Unterhalb der Sicherungen 23 ist die Frontwand 24 des zweiten Moduls 13 mit einer Stufung 25 versehen, die der Stufung 17 entspricht, wodurch ein unterer Frontwandabschnitt 26 gebildet ist, der Kabeleinführungskontaktstücke 27 trägt. Der Abstand des unteren Frontwandabschnittes 19 bzw. 26 von der Rückwand aller Module 11 bis 13 ist gleich, ebenso wie der Abstand der Bodenwand des Moduls 13 zur Stufung 25 gleich ist dem Abstand der Bodenwand der ersten Module 11, 12 zur Stufung 17.

Aufgrund unterschiedlicher Höhen der Module 11, 12 bzw. 13 ergibt sich unterhalb der ersten Module 11, 12 ein Freiraum 28, in dem Kabel leicht verlegt werden können. Damit die Schaltanlage 10 nicht aufgrund der unterschiedlichen Gewichtsverteilung sich um eine horizontal verlaufende Achse drehend umfallen kann, ist an der Außenwändung oder Seitenwandung des außen befindlichen ersten Moduls 11 eine Stütze 29 vorgesehen, die den Freiraum 28 im Bereich der Seitenwand 16 abdeckt.

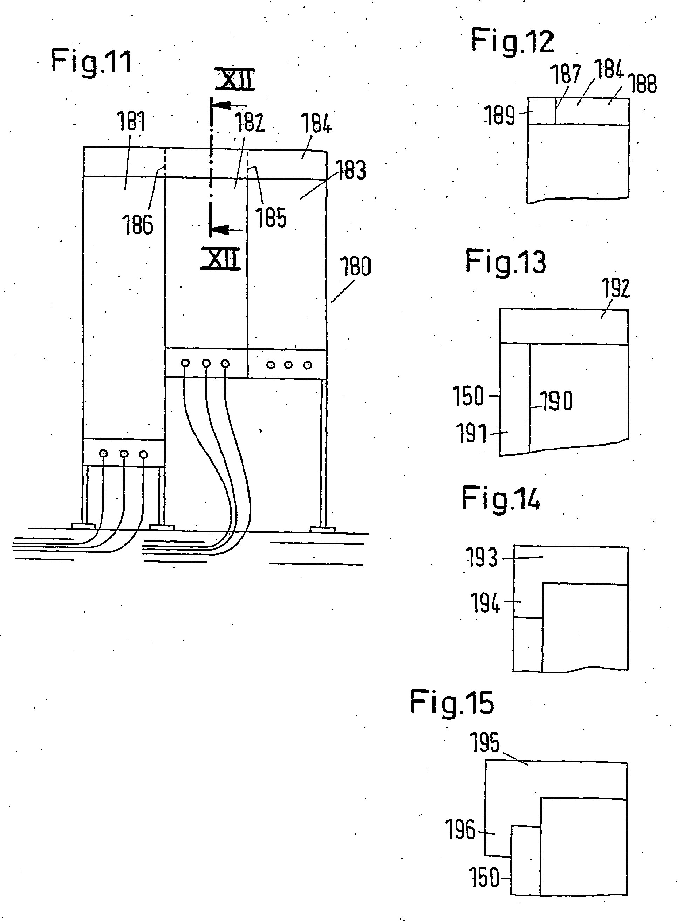

Im fertig montierten Zustand sind die Frontwände aller Module mittels einer geteilten Abdeckwand 150, siehe Fig. 13, nach vorne hin bis zum Boden abgedeckt, so dass sich eine optisch ansprechende Frontseite der Schaltanlage 10 ergibt.

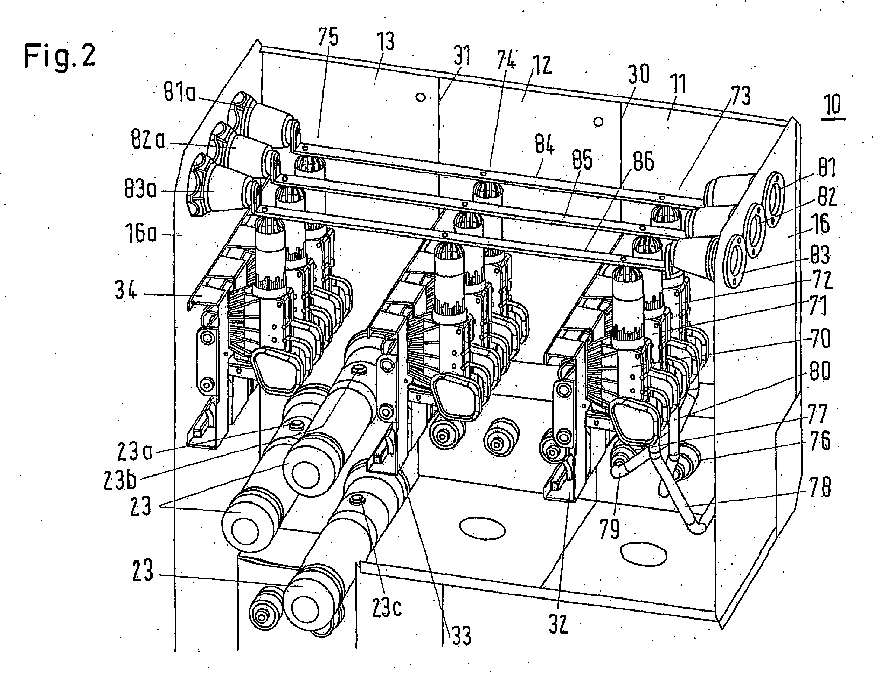

Die Fig. 2 zeigt eine Einsicht in die Schaltanlage 10. Die Schaltanlage 10 besitzt einen gemeinsamen Gasraum für alle Schaltfelder 11, 12 und 13, wobei die gegeneinander liegenden Kanten der Schaltfelder 11 und 12 bzw. 12 und 13 in den Trennebenen 30 bzw. 31 am gasdicht verschweißt sind.

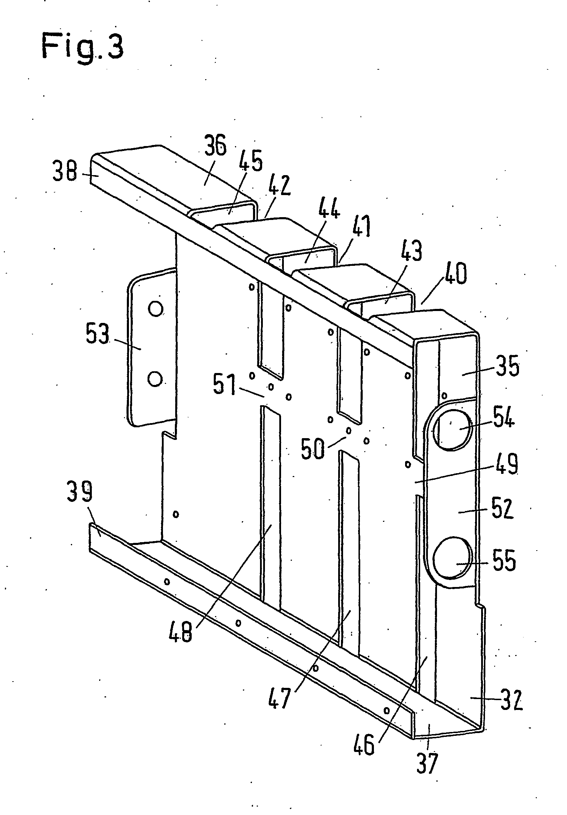

In der Schaltanlage 10 befinden sich der Anzahl der Schaltfelder entsprechende Anzahl von Trägern oder Trägerelementen, die anhand der Fig. 3 näher erläutert werden sollen.

Jedes Trägerelement, hier beispielsweise das Trägerelement 32, besitzt eine C-Form mit einem Stegabschnitt 35, der in einer vertikal verlaufenden Ebene liegt. An den horizontal verlaufenden Kanten des Stegabschnittes 25 sind ein oberer Schenkel 36 und ein unterer Schenkel 37 angeformt, deren Ebenen horizontal verlaufen. An den freien Endkanten der Schenkel 36 und 37 sind senkrecht zu diesem verlaufende Leisten 38 und 39 angeformt, die zur Versteifung des Trägerelementes 32 dienen, die aufeinander zu weisen und die in einer vertikalen Ebene liegen.

Im Stegabschnitt 35 befinden sich parallel nebeneinander liegende und vertikal verlaufende Aussparungen 40, 41, 42 die eine U-Form aufweisen und die - im montierten Zustand des Trägerelementes 32 - nach oben offen sind. Der Schenkel 36 besitzt den Aussparungen 40, 41 und 42 entsprechende weitere Aussparungen 43, 44 und 45, wobei die Aussparungen 40 bis 42 in die Aussparungen 43 bis 45 übergehen bzw. umgekehrt. Die Aussparungen 43 bis 45 enden an der Leiste 38.

Unterhalb der Aussparungen 40, 41 und 42 befinden sich senkrecht verlaufende Erdungsschalteraussparungen 46, 47 und 48, die jeweils mittels eines Steges 49, 50 und 51 von den Aussparungen 40 bis 42 getrennt sind.

Beidseitig an den vertikalen Kanten des Stegabschnittes 32 sind Führungsleisten 52 und 53 angeformt, die senkrecht zu dem Stegabschnitt 32 vorspringen und zwar in die gleiche Richtung wie die Schenkel 36, 37.

Die Führungsleisten 52 und 53 besitzen Durchgangsöffnungen 54, 55, in denen, wie weiter unten erläutert, Antriebsachsen für Lasttrennschalter und Erdungsschalter angeordnet bzw. eingesetzt bzw. hindurchgeführt sind.

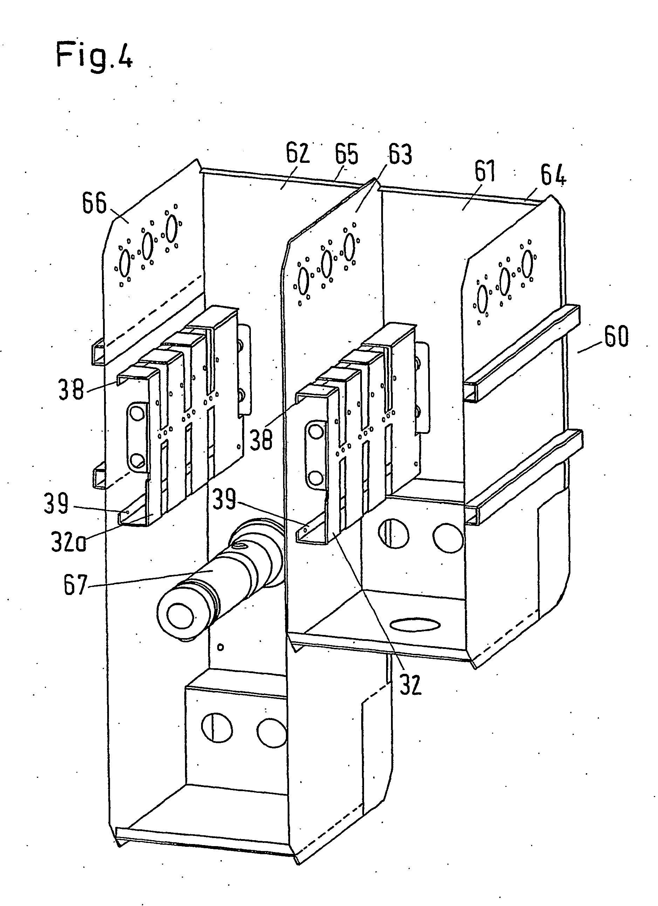

Die Fig. 4 zeigt eine Einsicht in eine zweifeldrig aufgebaute Schaltanlage 60. In der Zeichnung ist gezeigt, dass deren Felder 61 und 62 mittels einer Trennwand 63 voneinander abgetrennt sind. Diese Trennwand 63 ist normalerweise nicht vorhanden. An der Frontwand 64 und 65 der beiden Schaltfelder 61 und 62 ist je ein Trägerelement 32 gemäß Fig. 3 angeordnet, wobei ersichtlich ist, dass die Leisten 38, 39 in der Nähe der Trennwand angeordnet sind, wogegen die Leisten 38 und 39 des Trägerelements 32a in der Nähe der Seitenwandung 66 des Schaltfeldes 32 angeordnet ist. Das Schaltfeld 62 ist als zweites Modul ausgebildet und besitzt eine gegenüber dem ersten Modul 61 vergrößerte Höhe, wobei diese Höhe durch eine Sicherung 67 bedingt ist.

Es sei nun Bezug genommen auf die Fig. 2. Dort ist eine der Einsicht gemäß Fig. 4 entsprechende Einsicht in die Schaltanlage 10 gezeigt; man blickt bei abgenommener Decken- und Rückwand von hinten in die Schaltanlage 10. In die Aussparungen 40, 41 und 42 der Träger 32, 33 und 34 sind, wie weiter unten dargestellt werden soll, Antriebsgehäuse 70, 71 und 72 (entsprechend der Anzahl der Phasen) für einen dreiphasigen Lasttrennschalter eingesetzt, wobei der eine dreiphasige Lasttrennschalter 73 am Trägerelement 32, der andere Lasttrennschalter 74 am Träger 33 und der in dem Modul 13 befindliche Lasttrennschalter 75 im Träger 34 eingesetzt sind. An dem unteren Frontwandabschnitt sind Kabelanschlussstutzen 76, 77 zu sehen, im rechten Modul 11 ist der dritte Kabelanschlussstutzen nicht dargestellt bzw. von der Seitenwand 16 abgedeckt. Mittels starrer Leiter 78, 79, 80 sind die einzelnen Pole des Lasttrennschalters 73 mit den Kabelanschlussstutzen 76 und 77 verbunden, wobei das andere Ende der starren Leiter 78, 79 und 80 mit dem unteren Ende jeder Phase des Lasttrennschalters 37 verbunden ist.

In gleicher Weise ist auch die Verbindung der Kabelanschlusskontakte zu dem Lasttrennschalter 74 ausgebildet. Entsprechende, hier nicht dargestellte starre Leiter sind an dem Lasttrennschalter 75 in dem zweiten Modul 13 angeschlossen, die das untere Ende der einzelnen Pole des Lasttrennschalters 75 mit den zugehörigen Sicherungsanordnungen 23 verbinden. Zu diesem Zweck besitzen die Sicherungsaufnahmegehäuse an ihrer vertikal oben liegenden Mantellinie jeweils ein Anschlusskontaktstück 23a, 23b und 23c zur Verbindung mit den innerhalb der Sicherungsgehäuse befindlichen Sicherungen. Die Fig. 2 zeigt, wie weiter unten näher erläutert ist, Leiter 78, 79 und 80 in dem rechts dargestellten ersten Modul 11; entsprechende Leiter sind natürlich auch von den Lasttrennschaltern im links dargestellten Modul 13 zu den Sicherungen und von den Sicherungen wieder zu den Kabelanschlüssen vorgesehen. Diese Leiter sind in bevorzugter Ausführungsform starre Rundleiter.

In den Seitenwandungen 16 und 16a (das ist die außen liegende Seitenwand des zweiten Moduls 13) sind Innenkonuskontaktstücke 81, 82, 83 und 81a, 82a und 83a eingesetzt, an denen je eine Sammelschiene 84, 85 und 86 angeschlossen und befestigt ist, welche Sammelschienen weiterhin an den oberen Enden der Lasttrennschalter 73, 74 und 75 mit den Lasttrennschaltern verbunden und von diesen festgehalten sind.

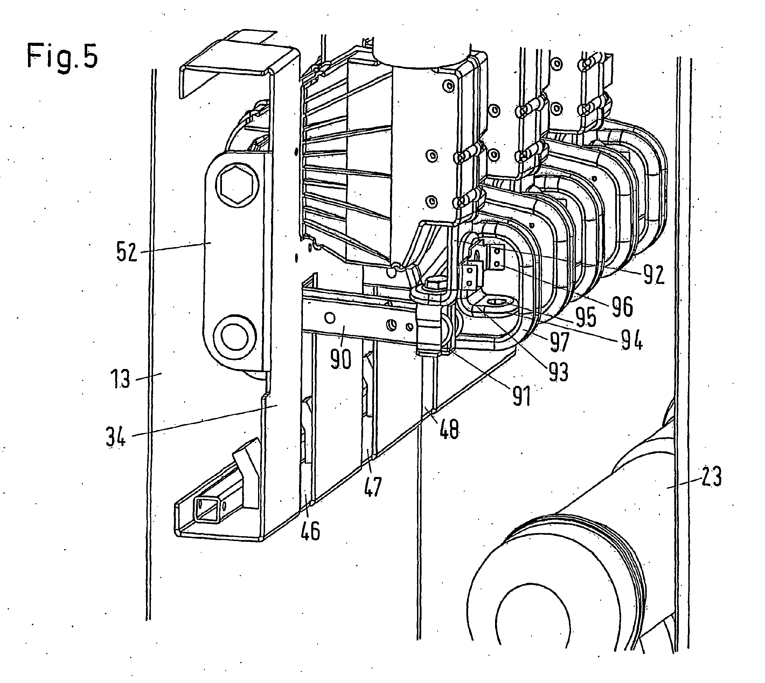

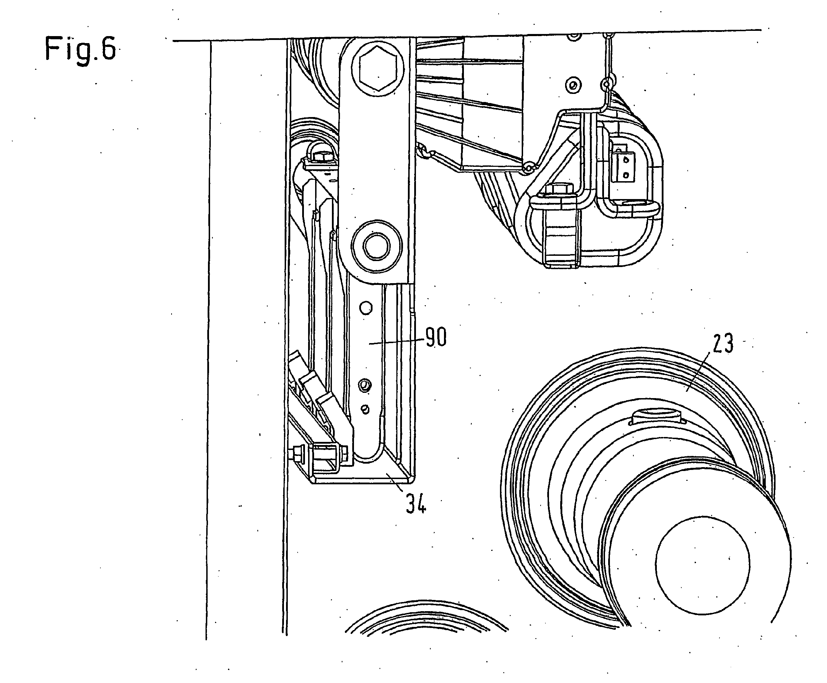

Es sei nun Bezug genommen auf die Figuren 5 und 6. Dort ist ein Einblick von hinten in das zweite Modul 13 dargestellt. Man erkennt den Träger 34 mit der Leiste 52 (hier sind gleiche Bezugsziffern für gleiche Abschnitte verwendet). Durch die unteren Aussparungen 46, 47 und 48 greifen Trennmesser 90 hindurch, die mit einem feststehenden Kontaktstück 91 am unteren Ende des Lasttrennschalters in Kontakt gebracht sind. Zu diesem Zweck ist am unteren Ende des Lasttrennschalters ein L-förmiges Kontaktelement 92 angeformt, an dem das feststehende Kontaktstück 91 befestigt ist, welches aus einem mittleren. Kontaktsteg und zwei äußeren Kontakttulpen aufgebaut ist; das Kontaktmesser ist aus zwei Einzelmessern zusammengesetzt. An dem Kontaktstück 92 ist weiterhin ein L-förmiges Anschlusskontaktstück 93 befestigt, dessen horizontal verlaufender Schenkel 94 eine Anschlussöffnung 95 aufweist, an denen die jeweils vorbeschriebenen Verbindungsleiter zwischen dem Lasttrennschalter 75 und dem jeweils der einzelnen Phase zugehörigen Sicherungselement 23 angeschlossen sind. An dem senkrecht verlaufenden Schenkel des Anschlusskontaktes 92 befindet sich weiterhin ein U-förmiger Bügel 96, an dessen Außenflächen Abschirmelemente 97 zur Abschirmung der unteren Kontaktanordnung der Lasttrennschalter angeschlossen sind. Die Fig. 6 zeigt eine andere Ansicht der Anordnung gemäß Fig. 5, bei dem die Erdungsmesser 90 sich innerhalb des Trägerelementes 34 befinden. Schematisch dargestellt sind die Sicherungselemente 23.

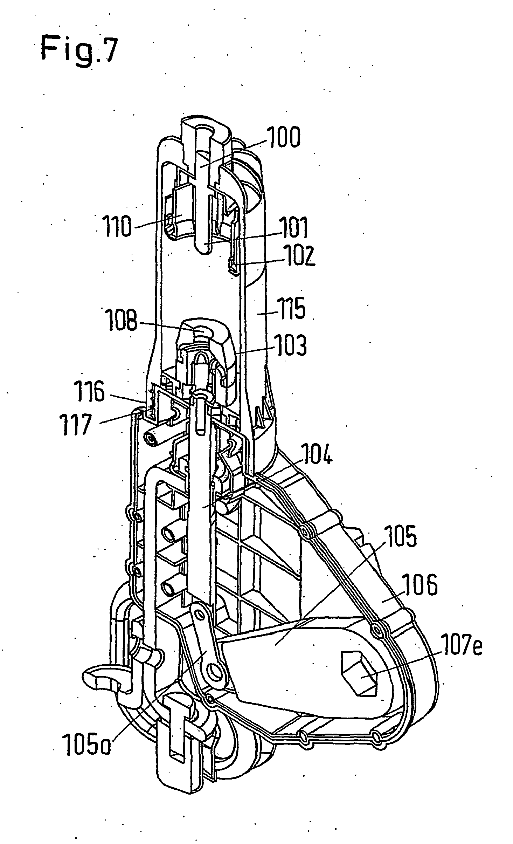

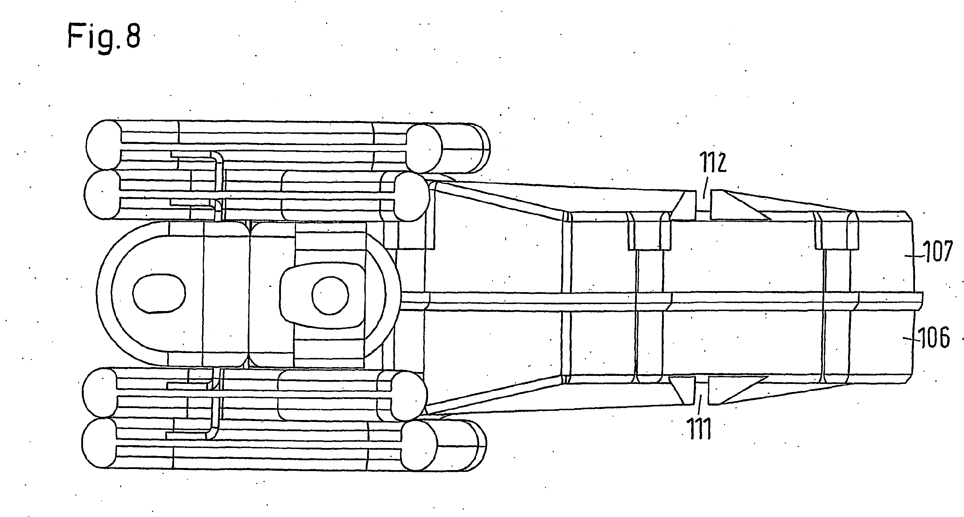

Der Lasttrennschalter, der in einer durch einen vertikal verlaufenden Schnitt gebildeten Schnittansicht in Fig. 7 dargestellt ist, besitzt ein feststehendes Kontaktstück 100 mit einem Kontaktstift 101 und diesen umgebenden Hauptkontaktstücken 102, der mit einem beweglichen Kontaktstück 103 zusammenwirkt. Die Fig. 7 zeigt den Lasttrennschalter in ausgeschaltetem Zustand. Das bewegliche Kontaktstück 103 ist über eine Antriebsstange 104 mit einer drehbaren Antriebskurbel 105 über ein Zwischenstück 105a, das am unteren Ende an der Antriebsstange 104 und am freien Ende der Antriebskurbel 105 angelenkt ist, gelenkig gekuppelt, welche Antriebskurbel 105 in einem aus zwei Gehäusehälften 106 und 107 (siehe Fig. 8) zusammengesetzten Antriebsgehäuse untergebracht ist. Die Antriebskurbel 105 besitzt eine sechseckige Öffnung 107a, durch die eine ebenfalls sechseckige Antriebswelle zur Verschwenkung der Antriebskurbel 105 hindurch geführt ist. Zum Einschalten des Lasttrennschalters gemäß Fig. 7 wird beim Verdrehen der Antriebswelle die mit dieser wegen der Sechseckform formschlüssig fest gekoppelten Antriebskurbel 105 im Uhrzeigersinn verschwenkt, so dass die Antriebsstange 104 und das bewegliche Kontaktstück 103 nach oben verschoben werden. Dabei greift zunächst der Kontaktstift 101 in eine Zentralbohrung 108 des Kontaktstückes 103 ein; der Kontaktstift 101 und das Kontaktstück 103 sind im Bereich der Zentralöffnung 108 aus lichtbogenfestem Material hergestellt, so dass ein sich dort bildender Einschaltlichtbogen nicht zu einer allzu großen Abschmelzung vom Material führt. Nach dem die Kontaktierung zwischen dem Kontaktstift und dem Kontaktstück 103 bewirkt ist, gleitet das Kontaktstück 103 weiter nach oben und gelangt mit Hauptkontaktstücken 108, die als Fingerkontaktstücke ausgebildet sind, in Berührung, wobei hier kein Lichtbogen entsteht, so dass das Kontaktstück 103 in dem Kontaktbereich, mit dem es mit den Hauptkontaktstücken in Verbindung gelangt, aus elektrisch gut leitendem, nicht aber aus dem Lichtbogen nicht widerstehenden Material hergestellt werden kann. Die Kontaktstücke jedes Lasttrennschalterpoles ist in einem topfförmigen Zylindergehäuse 115 untergebracht, das mit seinem offenen Ende bei 116 auf einem am Antriebsgehäuse 106, 107 befindlichen Außengewindestutzen 117 aufgeschraubt ist.

Im Prinzip ist der Lasttrennschalter gemäß Fig. 7 an sich bekannt. Von Bedeutung ist hier nur, dass auf den vertikal verlaufenden Außenseiten der beiden Gehäusehälften 106 und 107 senkrecht verlaufende, d. h. parallel zur Bewegungsrichtung des beweglichen Kontaktstücks verlaufende Nuten 111 und 112 vorgesehen sind, in die die vertikal verlaufenden Seitenkanten der Aussparungen 40 bis 42 eingreifen und auf diese Weise das Gehäuse 106 und 107 gegen Drehung um eine vertikale und horizontale Achse fixieren. Die Fig. 5 zeigt deutlich das Gehäuse 106, 107 in der zugehörigen Aussparung.

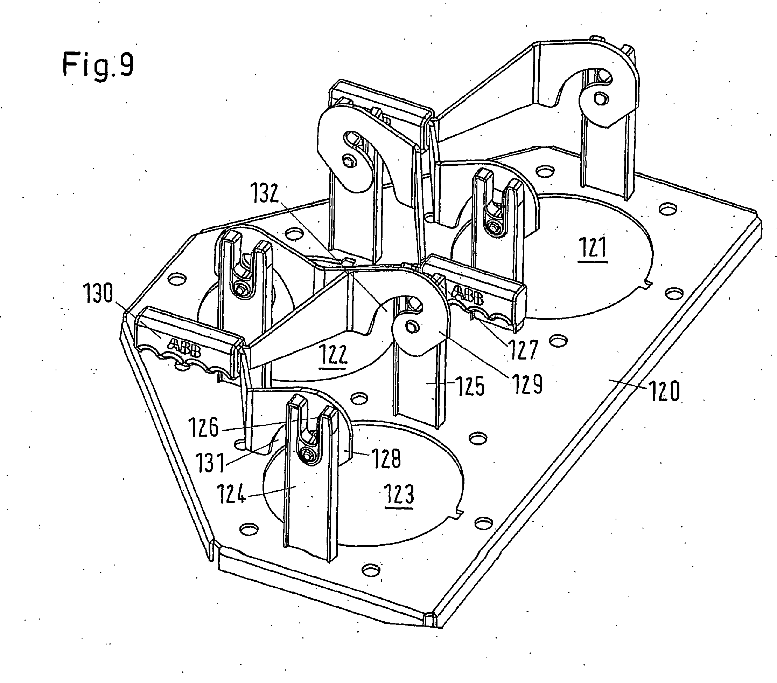

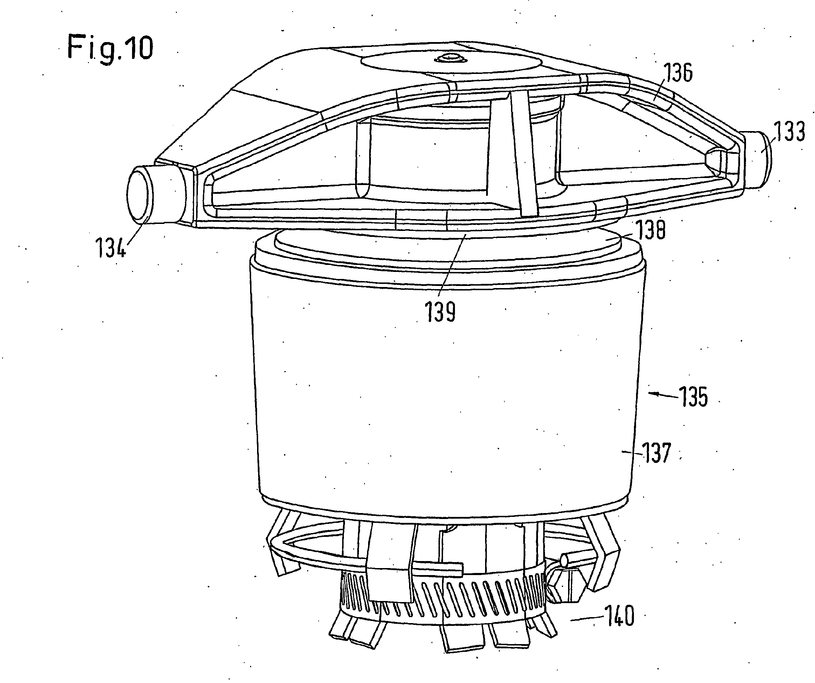

Es sei nun Bezug genommen auf die Figuren 9 und 10.

Die Sicherungen 23 sind in hier nicht näher dargestellte topfförmige Sicherungsgehäuse eingesetzt und zwar von vorne. Zu diesem Zwecke besitzt die Schaltanlage an ihrer Frontwand einen als Platte ausgebildeten Halteabschnitt 120, in dem Öffnungen 121, 122 und 123 zum Einstecken der Sicherungen vorgesehen sind. Beidseitig zu jeder Öffnung (es wird hier lediglich die Öffnung 123 betrachtet) sind senkrecht auf der Platte 120 Stützen 124, 125 vorgesehen, die an ihrem freien Ende eine U-förmige Gabelung 126 und 127 aufweisen. Unterhalb der Gabelung sind die Gabelarme 128 und 129 einer Sicherungsziehvorrichtung mit Bolzen drehbar in den Stützen 124, 125 gelagert, welche Gabelarme 128 und 129 miteinander eine V- oder U-Form bilden und im Bereich mittig zusammengeführt sind. Sie erstrecken sich in nebeneinander liegender stangenartige Verlängerungen, die sich berühren und senkrecht zur Verbindungslinie der Stützen 124, 125 sowie parallel zur Platte 120 verlaufen, sofern sie sich in der gezeigten Stellung befinden, und von einem Handgriff 130 umfasst sind. In den Armen 128 und 129 befinden sich Kulissen 131 und 132, in denen Zapfen 133 und 134 eines Sicherurigskopfes 135 aufgenommen sind. Der Sicherungskopf 135 umfasst zwei gegeneinander begrenzt bewegliche Kopfteile 136 und 137, zwischen denen sich Tellerfedern 138 und 139, von denen die Tellerfeder 139 teilweise von dem oberen Kopfteil 136 abgedeckt gezeichnet ist. Auf der dem oberen Kopfteil 136 entgegengesetzt liegenden Seite des Kopfteiles 137 befinden sich Kontaktelemente 140, die mit der zugehörigen Sicherung in Verbindung stehen.

Im montierten Zustand der Sicherungen liegen die Handgriffe 130 parallel zur Platte 120 und die Tellerfedern 138 und 139 drücken mit einer vorbestimmten Kraft die jeweilige Sicherung in ihre "Einschaltstellung". Wenn nun die Handgriffe 130 im Uhrzeigersinn um ihre Lagerachsen verschwenkt werden, so dass sie in eine Stellung senkrecht zur Platte 120 gelangen, dann wird aufgrund der Nockenform der Schlitze 131 und 132 der Kopfteil 136 von der Sicherung entfernt, so dass nach Herumschwenken in die senkrecht zur Platte liegende Stellung die Sicherung aus dem Sicherungsgehäuse herausgenommen werden kann.

Die entsprechende Ausführungsform der Sicherungsbehälter mit den Sicherungen und den Hebelanordnungen ist der parallel eingereichten Patentanmeldung DE 10 2005 009 235 A1 dargestellt. Aus Fig. 1 ist ersichtlich, dass die Front-, Decken-, Seiten- und Rückwände im Bereich ihrer Trennebenen Flanschleisten 160 und 170 aufweisen, wobei lediglich die Flanschleisten 160 und 170 zwischen den beiden Modulen 12 und 13 dargestellt sind. Die Flanschleisten 160, 170 sind mittels Schweißpunkten 161 miteinander verbunden, wodurch eine ausreichende Festigkeit in diesem Bereich erzielt wird. Zusätzlich sind die freien Randkanten mittels einer Schweißnaht verbunden, wobei diese Schweißnaht im Wesentlichen der Abdichtung und zur Erzeugung einer Gasdichtigkeit dient. Das sowohl die Deckwände der Module 11, 12 und 13 und die Seitenwandungen 16 mit Verstärkungsrippen versehen sind, um gegebenenfalls erhöhten Druck innerhalb der Schaltanlage auszuhalten, ist hier nur am Rande erwähnt.

Es sei Bezug genommen auf die Fig. 11.

Die dort beschriebene Schaltanlage 180 besitzt drei Module 181, 182 und 183, die den Modulen 13, 12 und 11 entsprechen. Oberhalb aller Module 181, 182 und 183 ist ein Kanal 184 angeordnet, der gegebenenfalls durch strichliert dargestellte Schottwandungen 185 und 186 unterteilt ist.

Wie aus der Fig. 12 ersichtlich ist, kann der Kanal 184 durch eine längs über das Schaltfeld verlaufende, vertikal angeordnete Trennwand 187 in zwei Teilkanäle 188 und 189 unterteilt sein.

Wenn, wie in Fig. 13 dargestellt, die Schaltanlage eine vordere Abdeckwand 150 aufweist, dann befindet sich zwischen der Frontwand 190 und der Abdeckwand 150 ein Raum 191, in dem sich Antriebselemente befinden. Ein dem Kanal 184 entsprechender Kanal 192 überdeckt dann auch den Raum 191.

Bei der Schaltanlage gemäß 114 kann ein Kanal 193 vorgesehen sein, der L-förmig mit einem Kanalschenkel 194 ausgebildet ist; der Kanalschenkel 194 nimmt einen Teil des Raumes 191 ein.

Bei einer anderen Ausgestaltung, siehe Fig. 15, kann der Kanal 195 vorgesehen sein, der mit einem Stirnbereich 196 auch die vordere Frontwand 150 stirnförmig überragt und zum Teil überdeckt.

Der Kanal 184 sowie die Teilkanäle 188, 189 und die Kanäle 192, 193 und 195 dienen zur Aufnahme von Niederspannungskomponenten, wie Steuer-, Regel-, Schalt- und Messelementen.

## Patentansprüche

1. Schaltanlage mit wenigstens zwei Feldern (11, 12), von denen wenigstens eines einen Lasttrennschalter (73, 74, 75) aufweist, wobei jedes Feld (11, 12) wenigstens eine Frontwand (14), eine Rückwand, eine Boden- und eine Deckenwand (15) und eine Kabelzuführung und Sammelschienen aufweist, die wenigstens ein Feld (11, 12) übergreifen, **dadurch gekennzeichnet, dass** jedes Feld (11, 12) modular ausgebildet ist und ein erstes Modul (11, 12) bildet, und dass zwischen der Frontwand (14) und der Rückwand jedes Moduls je ein Trägerelement (32) befestigt ist, an dem je ein Lasttrennschalter (73, 74, 75) fixierbar ist, so dass dessen bewegliches Kontaktstück vertikal beweglich ist und der Lasttrennschalter am oberen Ende mit den Sammelschienen verbunden ist und diese trägt wobei das Trägerelement (32) mit der Front- und/oder der Rückwand fest verbunden ist.

2. Schaltanlage nach Anspruch 1 mit Sicherungen (23), **dadurch gekennzeichnet, dass** ein zweites Modul (13) vorgesehen ist, das dem ersten Modul (11, 12) ähnlich und aus diesem dadurch gebildet ist, dass das erste Modul (11, 12) um eine Sicherungsanordnung mit einer der Anzahl der Phasen entsprechenden Anzahl von Sicherungen (23) ergänzt ist, so dass die Höhe des zweiten Moduls (13) gegenüber der Höhe des ersten Moduls (11, 12) vergrößert ist.

3. Schaltanlage nach einem der vorherigen Ansprüche, **dadurch gekennzeichnet, dass** die Frontwand (14) im unteren Bereich gestuft ist, wobei der Abstand des unter-halb der Stufe befindlichen Frontwandabschnittes (19) von der Rückwand kleiner ist als der Abstand des oberen Frontwandabschnittes (18) von der Rückwand.

4. Schaltanlage nach Anspruch 3, **dadurch gekennzeichnet, dass** im unteren Frontwandabschnitt (19) die Kabelzuführungen für das jeweilige Modul (11, 12) angeordnet sind.

5. Schaltanlage nach Anspruch 4, **dadurch gekennzeichnet, dass** die unteren Frontwandabschnitte (19) die gleiche Höhe besitzen.

6. Schaltanlage nach einem der vorherigen Ansprüche, **dadurch gekennzeichnet, dass** zwei nebeneinander liegende Module (11, 12) an den sich berührenden Wandkanten miteinander verschweißt sind.

7. Schaltanlage, insbesondere nach Anspruch 6, **dadurch gekennzeichnet, dass** an den dem benachbarten Modul zugewandten Wandkanten umlaufenden, senkrecht vorspringende Flanschleisten (160, 170) angeformt sind, die gegeneinander gelegt und miteinander verbunden sind.

8. Schaltanlage nach Anspruch 7, **dadurch gekennzeichnet, dass** die Flanschleisten (160, 170) durch Punktschweißverfahren miteinander verbunden sind.

9. Schaltanlage nach einem der Ansprüche 7 bis 8, **dadurch gekennzeichnet, dass** zwischen den Flanschleisten (160, 170) ein Dichtungsmaterial vorgesehen ist.

10. Schaltanlage nach einem der Ansprüche 7 bis 9, **dadurch gekennzeichnet, dass** die Flanschleisten (160, 170) miteinander durch kleben verbunden sind.

11. Schaltanlage nach einem der Ansprüche 7 bis 10, **dadurch gekennzeichnet, dass** die Flanschleisten (160,170) an ihren freien Randkanten miteinander verschweißt sind.

12. Schaltanlage nach Anspruch 11, **dadurch gekennzeichnet, dass** am unteren Ende des Lasttrennschalters (73, 74, 75) ein feststehenden Erdungsschaltkontaktstück angeordnet ist, das mittels eines Erdungsschalter an Erde legbar ist.

13. Schaltanlage nach Anspruch 12, **dadurch gekennzeichnet, dass** am unteren Ende des Lasttrennschalters (73, 74, 75) außer dem feststehenden Erdungsschaltkontaktstück Leitungen angeschlossen sind, die bei den ersten Modulen (11, 12) mit den zugehörigen Kabeleinführungen und bei den zweiten Modulen (13) mit je einer zugehörigen Sicherungsanordnung (23) verbunden sind.

14. Schaltanlage nach einem der Ansprüche 12 oder 13, **dadurch gekennzeichnet, dass** sich das untere Ende des Lasttrennschalters (73, 74, 75) mit dem feststehenden Erdungsschalterkontaktstück zwischen wenigstens zwei Abschirmelementen (97) befindet.

15. Schaltanlage nach Anspruch 14, **dadurch gekennzeichnet, dass** nebeneinander befindliche, untere Enden der Lasttrennschalterpole mittels wenigstens eins Abschirmelementes (97) voneinander getrennt sind.

16. Schaltanlage nach einem der vorherigen Ansprüche, **dadurch gekennzeichnet, dass** der Antrieb für das bewegliche Kontaktstück des Lasttrennschalters (73, 74, 75) in einem Antriebgehäuse (70, 71, 72) untergebracht ist, das am Trägerelement (32) fixiert ist.

17. Schaltanlage nach Anspruch 16, **dadurch gekennzeichnet, dass** das Trägerelement (32) eine der Anzahl der Phasen entsprechende Anzahl von Aussparungen aufweist, in die das Antriebsgehäuse (70, 71, 72) einfügbar ist.

18. Schaltanlage nach Anspruch 17, **dadurch gekennzeichnet, dass** die Aussparungen U-förmig nach oben offen sind und die vertikalen Seitenkanten der Aussparung in Vertiefungen am Antriebsgehäuse (70, 71, 72) eingreifen, so dass zur Montage das Antriebsgehäuse (70, 71, 72) von oben mit den Vertiefungen in die Aussparungen einfügbar und damit der Lasttrennschalter (73, 74, 75) gegen Verdrehen um eine horizontale und vertikale Achse gesichert ist.

19. Schaltanlage nach einem der Ansprüche 17 oder 18, **dadurch gekennzeichnet, dass** das Trägerelement (32) U-förmig ausgebildet ist, mit einem Stegabschnitt mit den Aussparungen und zwei senkrecht dazu verlaufenden Schenkeln, welche horizontal in dem Modul angeordnet sind, von denen der obere Schenkel Schenkelaussparungen aufweist, die in die Aussparungen im Stegabschnitt übergehen.

20. Schaltanlage nach Anspruch 19, **dadurch gekennzeichnet, dass** die Schenkelenden oder Schenkelendkanten in einer Ebene liegen, die vertikal verläuft.

21. Schaltanlage nach Anspruch 20, **dadurch gekennzeichnet, dass** die Ebene der Schenkelendkanten nahe der Trennebene zwischen zwei nebeneinander angeordneten Modulen liegt.

22. Schaltanlage nach einem der Ansprüche 19 bis 21, **dadurch gekennzeichnet, dass** die Ebene der Schenkelendkanten bei einem außen liegenden Modul der Schaltanlage in der Nähe der außen liegenden Seitenwand (16) angeordnet ist.

23. Schaltanlage, nach einem der Ansprüche 19 bis 22, **dadurch gekennzeichnet, dass** bei einer Schaltanlage mit mehreren Modulen die Schenkel aller Trägerelemente (32) in gleiche Richtung vorspringen.

24. Schaltanlage nach einem der Ansprüche 19 bis 23, **dadurch gekennzeichnet, dass** zur Verstärkung an den freien Enden der Schenkel je eine Leiste angeformt ist, die horizontal verlaufen und aufeinander zu weisen und in einer Ebene liegen, die parallel zum Stegabschnitt verläuft, wobei die offene Seite der U- bzw. C-Form zum benachbarten Modul auf einer Seite hin offen ist.

25. Schaltanlage nach Anspruch 24, **dadurch gekennzeichnet, dass** die Ebene der Leiste etwa in der Trennebene zwischen zwei benachbarten Modulen liegt.

26. Schaltanlage nach einem der Ansprüche 12 bis 25, **dadurch gekennzeichnet, dass** an den vertikal verlaufenden Kanten jedes Trägerelementes (32) Führungsstege in die Richtung, in der die Schenkel vorspringen, abgewinkelt sind, in denen Öffnungen zur Halterung und Führung von Antriebswellen für den Lasttrennschalter (73, 74, 75) und den Erdungsschalter vorgesehen sind.

27. Schaltanlage nach einem der vorherigen Ansprüche, **dadurch gekennzeichnet, dass** untere weitere Aussparungen am Trägerelement (32) vorgesehen sind, durch die Erdungsmesser eines Erdungsschalters durchschwenkbar sind.

28. Schaltanlage nach einem der vorherigen Ansprüche, **dadurch gekennzeichnet, dass** die Sammelschienen mit den oberen Enden der Lasttrennschalter (73, 74, 75) fest verbunden und in Durchführungskontaktelementen in den seitlichen Endwänden der Schaltanlage gehalten sind.

29. Schaltanlage nach einem der vorherigen Ansprüche, **dadurch gekennzeichnet, dass** oberhalb aller Module ein Kanal angeordnet ist, der die Module überdeckt und in den Steuer-, Kontroll- öder Messgeräte und dergleichen, die sich auf Niederspannung , befinden, untergebracht sind.

30. Schaltanlage nach Anspruch 29, **dadurch gekennzeichnet, dass** der Kanal durch wenigstens eine Schottwand unterteilt ist.

31. Schaltanlage nach einem der Ansprüche 29 bis 30, **dadurch gekennzeichnet, dass** der Kanal durch eine senkrecht und in der Richtung der Aneinanderreihung der Module verlaufende Trennwand (63) in zwei Teilkanäle unterteilt ist.

32. Schalanlage mit einer vorderen Abdeckwand, die die vor den Modulen befindlichen Antriebs- und Steuereinrichtungen abdeckt, nach einem der Ansprüche 29 bis 31 **dadurch gekennzeichnet, dass** der Kanal von der Rückwand bis zur Frontwand (14) der Schaltanlage angeordnet ist.

33. Schaltanlage nach Anspruch 32, **dadurch gekennzeichnet, dass** der Kanal einen Teilbereich des Raumes mit umfasst, in dem sich Antriebselemente befinden, so dass der Kanal in einer vertikalen Schnittansicht eine L-Form ausweist.

34. Schaltanlage nach einem der Ansprüche 29 bis 33, **dadurch gekennzeichnet, dass** der Kanal stimförmig die vordere Frontwand (14) überragt.

35. Schaltanlage nach einem der vorherigen Ansprüche, **dadurch gekennzeichnet, dass** die Module auf einem Gestell angeordnet sind, und dass der Raum zwischen dem Boden und der Bodenwand der Module als Kabelkanal benutzbar ist.

## Claims

1. Switchgear assembly having at least two panels (11, 12), of which at least one has a switch disconnector (73, 74, 75), each panel (11, 12) having at least one front wall (14), a rear wall, a bottom wall and a top wall (15) and a cable feed and busbars, which cover at least one panel (11, 12), **characterized in that** each panel (11, 12) has a modular design and forms a first module (11, 12), and **in that** in each case one carrier element (32) is fastened between the front wall (14) and the rear wall of each module, it being possible for in each case one switch disconnector (73, 74, 75) to be fixed to said carrier element such that the moveable contact piece of said switch disconnector is capable of moving vertically, and the switch disconnector is connected at the upper end to the busbars and bears them, the carrier element (32) being fixedly connected to the front wall and/or the rear wall.

2. Switchgear assembly according to Claim 1 with fuses (23), **characterized in that** a second module (13) is provided which is formed in a similar manner to the first module (11, 12) and from said first module by virtue of the fact that the first module (11, 12) is supplemented by a fuse arrangement with a number of fuses (23) which corresponds to the number of phases, with the result that the height of the second module (13) is increased in comparison with the height of the first module (11, 12).

3. Switchgear assembly according to one of the preceding claims, **characterized in that** the front wall (14) is stepped in the lower region, the distance between the front wall section (19) located beneath the step and the rear wall being shorter than the distance between the upper front wall section (18) and the rear wall.

4. Switchgear assembly according to Claim 3, **characterized in that** the cable feeds for the respective module (11, 12) are arranged in the lower front wall section (19).

5. Switchgear assembly according to Claim 4, **characterized in that** the lower front wall sections (19) have the same height.

6. Switchgear assembly according to one of the preceding claims, **characterized in that** two adjacent modules (11, 12) are welded to one another at the touching wall edges.

7. Switchgear assembly, in particular according to Claim 6, **characterized in that** peripheral flange strips (160, 170) protruding at perpendicularly are integrally formed on the wall edges facing the adjacent module, which flange strips are positioned against one another and connected to one another.

8. Switchgear assembly according to Claim 7, **characterized in that** the flange strips (160, 170) are connected to one another by means of a spot welding process.

9. Switchgear assembly according to either of Claims 7 and 8, **characterized in that** a sealing material is provided between the flange strips (160, 170).

10. Switchgear assembly according to one of Claims 7 to 9, **characterized in that** the flange strips (160, 170) are connected to one another by means of adhesive bonding.

11. Switchgear assembly according to one of Claims 7 to 10, **characterized in that** the flange strips (160, 170) are welded to one another at their free peripheral edges.

12. Switchgear assembly according to Claim 11, **characterized in that** a stationary grounding switching contact piece is arranged at the lower end of the switch disconnector (73, 74, 75), which grounding switching contact piece can be connected to ground by means of a grounding switch.

13. Switchgear assembly according to Claim 12, **characterized in that** lines are connected at the lower end of the switch disconnector (73, 74, 75) outside of the stationary grounding switching contact piece, which lines are connected to the associated cable leadins in the case of the first modules (11, 12) and to in each case one associated fuse arrangement (23) in the case of the second modules (13).

14. Switchgear assembly according to either of Claims 12 and 13, **characterized in that** the lower end of the switch disconnector (73, 74, 75) with the stationary grounding switch contact piece is located between at least two shielding elements (97).

15. Switchgear assembly according to Claim 14, **characterized in that** adjacent, lower ends of the switch disconnector poles are separated from one another by means of at least one shielding element (97).

16. Switchgear assembly according to one of the preceding claims, **characterized in that** the drive for the moveable contact piece of the switch disconnector (73, 74, 75) is accommodated in a drive housing (70, 71, 72), which is fixed to the carrier element (32).

17. Switchgear assembly according to Claim 16, **characterized in that** the carrier element (32) has a number of cutouts which corresponds to the number of phases, into which cutouts the drive housing (70, 71, 72) can be inserted.

18. Switchgear assembly according to Claim 17, **characterized in that** the cutouts are open in the form of a U at the top, and the vertical side edges of the cutout engage in depressions in the drive housing (70, 71, 72), with the result that, in order to fit it, the drive housing (70, 71, 72) can be inserted into the cutouts from above with the depressions, and therefore the switch disconnector (73, 74, 75) is prevented from rotating about a horizontal and vertical axis.

19. Switchgear assembly according to either of Claims 17 and 18, **characterized in that** the carrier element (32) is in the form of a U, having a web section with the cutouts and two limbs which run perpendicularly thereto and are arranged horizontally in the module, the upper one of said limbs having limb cutouts, which merge with the cutouts in the web section.

20. Switchgear assembly according to Claim 19, **characterized in that** the limb ends or limb end edges lie in one plane, which runs vertically.

21. Switchgear assembly according to Claim 20, **characterized in that** the plane of the limb end edges is close to the plane of separation between two adjacent modules.

22. Switchgear assembly according to one of Claims 19 to 21, **characterized in that** the plane of the limb end edges in the case of an outer module of the switchgear assembly is arranged in the vicinity of the outer side wall (16).

23. Switchgear assembly according to one of Claims 19 to 22, **characterized in that**, in the case of a switchgear assembly having a plurality of modules, the limbs of all the carrier elements (32) protrude in the same direction.

24. Switchgear assembly according to one of Claims 19 to 23, **characterized in that**, for strengthening purposes, in each case one strip is integrally formed on the free ends of the limbs, which strips run horizontally and point towards one another and lie in one plane, which runs parallel to the web section, the open side of the U shape or C shape being open towards the adjacent module on one side.

25. Switchgear assembly according to Claim 24, **characterized in that** the plane of the strip is approximately in the plane of separation between two adjacent modules.

26. Switchgear assembly according to one of Claims 12 to 25, **characterized in that** guide webs are bent back at the vertical edges of each carrier element (32) in the direction in which the limbs protrude, in which guide webs openings are provided for the purpose of holding and guiding drive shafts for the switch disconnector (73, 74, 75) and the grounding switch.

27. Switchgear assembly according to one of the preceding claims, **characterized in that** lower, further cutouts are provided on the carrier element (32), through which the grounding blade of a grounding switch can be pivoted.

28. Switchgear assembly according to one of the preceding claims, **characterized in that** the busbars are fixedly connected to the upper ends of the switch disconnectors (73, 74, 75) and are held in leadthrough contact elements in the lateral end walls of the switchgear assembly.

29. Switchgear assembly according to one of the preceding claims, **characterized in that** a channel is arranged above all of the modules which covers the modules and in which control, monitoring or measuring devices or the like, which are at a low voltage, are accommodated.

30. Switchgear assembly according to Claim 29, **characterized in that** the channel is divided by at least one partition wall.

31. Switchgear assembly according to either of Claims 29 and 30, **characterized in that** the channel is divided into two subchannels by a separating wall (63) running perpendicularly and in the direction in which the modules are arranged next to one another in a row.

32. Switchgear assembly having a front covering wall, which covers the drive and control devices located in front of the modules, according to one of Claims 29 to 31, **characterized in that** the channel is arranged from the rear wall up to the front wall (14) of the switchgear assembly.

33. Switchgear assembly according to Claim 32, **characterized in that** the channel also includes a subregion of the area in which drive elements are located, with the result that the channel has an L shape in a vertical sectional view.

34. Switchgear assembly according to one of Claims 29 to 33, **characterized in that** the channel protrudes beyond the forward front wall (14) at the end.

35. Switchgear assembly according to one of the preceding claims, **characterized in that** the modules are arranged on a frame, and **in that** the area between the bottom and the bottom wall of the modules can be used as a cable channel.

## Revendications

1. Installation de commutation présentant au moins deux champs (11, 12) dont au moins l'un présente un commutateur (73, 74, 75) de séparation de la charge, chaque champ (11, 12) présentant au moins une paroi frontale (14), une paroi arrière, une paroi de fond et une paroi de couvercle (15) ainsi qu'une amenée de câble et des rails collecteurs qui chevauchent au moins un champ (11, 12),
**caractérisée en ce que**
chaque champ (11, 12) est de configuration modulaire et forme un premier module (11, 12) et
**en ce qu'**entre la paroi frontale (14) et la paroi arrière de chaque module est fixé un élément de support (32) sur lequel un commutateur (73, 74, 75) de séparation de la charge peut être fixé de telle sorte que sa pièce de contact mobile puisse se déplacer verticalement et que le commutateur de séparation de la charge soit raccordé à son extrémité supérieure aux rails de collecte et porte ces derniers et
**en ce que** l'élément de support (32) est relié solidairement à la paroi frontale et/ou à la paroi arrière.

2. Installation de commutation selon la revendication 1, dotée de protections (23), **caractérisée en ce qu'**un deuxième module (13) est prévu et est configuré de manière similaire au premier module (11, 12) et formé de ce dernier par le fait que le premier module (11, 12) est complété d'un ensemble de protection qui présente plusieurs protections (23) dont le nombre correspond au nombre des phases, de telle sorte que la hauteur du deuxième module (13) soit plus grande que la hauteur du premier module (11, 12).

3. Installation de commutation selon l'une des revendications précédentes, **caractérisée en ce que** la paroi frontale (14) est étagée dans sa partie inférieure, la distance entre la partie (19) de la paroi frontale située en dessous du gradin par rapport à la paroi arrière étant plus petite que la distance entre la partie supérieure (18) de la paroi frontale et la paroi arrière.

4. Installation de commutation selon la revendication 3, **caractérisée en ce que** les amenées de câble de chaque module (11, 12) sont disposées dans la partie inférieure (19) de la paroi frontale.

5. Installation de commutation selon la revendication 4, **caractérisée en ce que** les parties inférieures (19) de paroi frontale ont la même hauteur.

6. Installation de commutation selon l'une des revendications précédentes, **caractérisée en ce que** deux modules (11, 12) disposés l'un à côté de l'autre sont soudés l'un à l'autre sur les bords de leur paroi en contact mutuel.

7. Installation de commutation en particulier selon la revendication 6, **caractérisée en ce que** des languettes de bride (160, 170) placées l'une contre l'autre et raccordées les unes aux autres sont formées en saillie perpendiculaire autour des bords tournés vers le module voisin.

8. Installation de commutation selon la revendication 7, **caractérisée en ce que** les languettes de bride (160, 170) sont raccordées les unes aux autres par une opération de soudage par points.

9. Installation de commutation selon l'une des revendications 7 et 8, **caractérisée en ce qu'**un matériau d'étanchéité est prévu entre les languettes de bride (160, 170).

10. Installation de commutation selon l'une des revendications 7 à 9, **caractérisée en ce que** les languettes de bride (160, 170) sont raccordées l'une à l'autre par collage.

11. Installation de commutation selon l'une des revendications 7 à 10, **caractérisée en ce que** les languettes de bride (160, 170) sont soudées l'une sur l'autre sur leur bordure libre.

12. Installation de commutation selon la revendication 11, **caractérisée en ce qu'**une pièce fixe de contact de mise à la terre qui peut être mise à la terre au moyen d'un commutateur de mise à la terre est disposée à l'extrémité inférieure du commutateur (73, 74, 75) de séparation de la charge.

13. Installation de commutation selon la revendication 12, **caractérisée en ce que** des conducteurs sont raccordés à l'extrémité inférieure du commutateur (73, 74, 75) fixe de contact de raccordement à la terre et sont raccordés pour les premiers modules (11, 12) aux amenées de câble associées et pour les deuxièmes modules (13) à un ensemble associé de protection (23).

14. Installation de commutation selon l'une des revendications 12 ou 13, **caractérisée en ce que** l'extrémité inférieure du commutateur (73, 74, 75) de séparation de la charge est située entre au moins deux éléments de blindage (97) en même temps que la pièce fixe de contact de mise à la terre du commutateur.

15. Installation de commutation selon la revendication 14, **caractérisée en ce que** des extrémités inférieures voisines l'une de l'autre des pôles du commutateur de séparation de la charge sont séparées les unes des autres au moyen d'au moins un élément de blindage (97).

16. Installation de commutation selon l'une des revendications précédentes, **caractérisée en ce que** l'entraînement de la pièce de contact mobile du commutateur (73, 74, 75) est placé dans un boîtier d'entraînement (70, 71, 72) fixé sur l'élément de support (32).

17. Installation de commutation selon la revendication 16, **caractérisée en ce que** l'élément de support (32) présente un nombre de découpes qui correspond au nombre des phases et dans lesquelles le boîtier d'entraînement (70, 71, 72) peut être inséré.

18. Installation de commutation selon la revendication 17, **caractérisée en ce que** les découpes sont ouvertes vers le haut en forme de U et **en ce que** les bords latéraux verticaux des découpes s'engagent dans des creux ménagés sur le boîtier d'entraînement (70, 71, 72) de telle sorte que pour le montage, le boîtier d'entraînement (70, 71, 72) peut être inséré dans les découpes par le haut avec les creux et qu'ainsi le commutateur (73, 74, 75) de séparation de la charge soit empêché de tourner autour d'un axe horizontal et d'un axe vertical.

19. Installation de commutation selon l'une des revendications 17 ou 18, **caractérisée en ce que** l'élément de support (32) est configuré en forme de U dont la partie centrale est dotée de découpes et les deux branches qui en partent perpendiculairement sont disposées horizontalement dans le module, la branche supérieure présentant des découpes de branche qui se prolongent en les découpes ménagées dans la partie centrale.

20. Installation de commutation selon la revendication 19, **caractérisée en ce que** les extrémités des branches ou les bords des extrémités des branches sont situées dans un plan qui s'étend à la verticale.

21. Installation de commutation selon la revendication 20, **caractérisée en ce que** le plan des bords des extrémités de branche est situé à proximité du plan de séparation entre deux modules disposés l'un à côté de l'autre.

22. Installation de commutation selon l'une des revendications 19 à 21, **caractérisée en ce que** le plan des bords d'extrémité des branches est disposé à proximité de la paroi latérale (16) située à l'extérieur du module de l'installation de commutation situé à l'extérieur.

23. Installation de commutation selon l'une des revendications 19 à 22, **caractérisée en ce que** dans le cas d'une installation de commutation à plusieurs modules, les branches de tous les éléments de support (32) débordent dans la même direction.

24. Installation de commutation selon l'une des revendications 19 à 23, **caractérisée en ce que** pour assurer un renfort, des languettes sont formées aux extrémités libres des branches, s'étendent à l'horizontale et sont tournées les unes vers les autres en étant situées dans un plan qui s'étend parallèlement à la partie intermédiaire, le côté ouvert de la forme du U ou du C étant ouvert sur un côté en direction du module voisin.

25. Installation de commutation selon la revendication 24, **caractérisée en ce que** le plan des languettes est situé sensiblement dans le plan de séparation entre deux modules voisins.

26. Installation de commutation selon l'une des revendications 12 à 25, **caractérisée en ce que** des nervures de guidage prévues sur les bords s'étendant à la verticale de chaque élément de support (32) sont coudées dans la direction dans laquelle les branches débordent, des ouvertures de maintien et de guidage d'arbre d'entraînement du commutateur (73, 74, 75) de séparation de la charge et du commutateur de mise à la terre étant prévues dans ces branches.

27. Installation de commutation selon l'une des revendications précédentes, **caractérisée en ce que** d'autres découpes inférieures sont prévues sur l'élément de support (32) et peuvent être traversées par les lames de mise à la terre d'un commutateur de mise à la terre.

28. Installation de commutation selon l'une des revendications précédentes, **caractérisée en ce que** les rails de collecte sont raccordés solidairement aux extrémités supérieures des commutateurs (73, 74, 75) de séparation de la charge et sont maintenus dans des éléments de contact de passage traversant les parois d'extrémité latérale de l'installation de commutation.

29. Installation de commutation selon l'une des revendications précédentes, **caractérisée en ce qu'**au-dessus de tous les modules est disposé un canal qui recouvre les modules et dans lequel des appareils de commande, de contrôle ou de mesure qui sont placés à basse tension sont installés.

30. Installation de commutation selon la revendication 29, **caractérisée en ce que** le canal est divisé par au moins une cloison étanche.

31. Installation de commutation selon l'une des revendications 29 et 30, **caractérisée en ce que** le canal est divisé en deux parties de canaux par une paroi de séparation (63) et s'étend à la verticale et dans la direction de rangement des modules.

32. Installation de commutation dotée d'une paroi de recouvrement avant qui recouvre le dispositif d'entraînement et de commande situé en avant des modules, selon l'une des revendications 29 à 31, **caractérisée en ce que** le canal s'étend entre la paroi arrière et la paroi frontale (14) de l'installation de commutation.

33. Installation de commutation selon la revendication 32, **caractérisée en ce que** le canal comporte une partie de l'espace dans lequel se trouvent les éléments d'entraînement de telle sorte que le canal présente en coupe verticale la forme d'un L.

34. Installation de commutation selon l'une des revendications 29 à 33, **caractérisée en ce que** le canal déborde frontalement de la paroi frontale avant (14).

35. Installation de commutation selon l'une des revendications précédentes, **caractérisée en ce que** les modules sont disposés sur un bâti et **en ce que** l'espace entre le fond et la paroi de fond des modules peut être utilisé comme canal pour câble.
